(19) Europäisches Patentamt / European Patent Office / Office européen des brevets

(11) **EP 2 008 524 A1**

(12) **EUROPEAN PATENT APPLICATION**
published in accordance with Art. 153(4) EPC

(43) Date of publication:
**31.12.2008 Bulletin 2009/01**

(21) Application number: **07737070.8**

(22) Date of filing: **16.04.2007**

(51) Int Cl.:
***A23F 3/16*** (2006.01)

(86) International application number:
**PCT/JP2007/000413**

(87) International publication number:
**WO 2007/122817 (01.11.2007 Gazette 2007/44)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **17.04.2006 JP 2006113436**

(71) Applicant: **Kao Corporation**
**Chuo-ku**
**Tokyo 103-8210 (JP)**

(72) Inventors:
• **ABE, Tetsuya**
**Kamisu-shi, Ibaraki 314-0103 (JP)**
• **UEOKA, Hideaki**
**Kamisu-shi, Ibaraki 314-0103 (JP)**
• **SHIBATA, Keiji**
**Kamisu-shi, Ibaraki 314-0103 (JP)**

(74) Representative: **HOFFMANN EITLE**
**Patent- und Rechtsanwälte**
**Arabellastrasse 4**
**81925 München (DE)**

(54) **PROCESS FOR PRODUCING PURIFIED GREEN TEA EXTRACT**

(57) A preparation process of a purified green tea extract including mixing a green tea extract treated with an enzyme having a tannase activity in a mixed solution containing an organic solvent and water at a mass ratio exceeding 90/10 and not greater than 97/3, and separating a precipitate thus formed.

The process is for producing a purified green tea extract, from a green tea extract, containing non-polymer catechins in high concentration, which can improve the taste by reducing bitterness/astringency and miscellaneous tastes caused by dietary fibers of green tea, provide a reduced protein content, and make it easy to drink.

EP 2 008 524 A1

**Description**

[Field of the Invention]

The present invention relates to a process for producing, from a green tea extract, a purified green tea extract containing non-polymer catechins in high concentration, which can improve the taste of the purified green tea extract by reducing the bitterness/astringency of a green tea and the miscellaneous tastes caused by the dietary fibers of green tea; provide a reduced protein content; and make it easy to drink.

[Background of the Invention]

Catechins are known to have a cholesterol-suppressing effect and an $\alpha$-amylase activity inhibitory effect (Patent Documents 1 and 2). In order for such physiological effects to materialize, it is necessary that an adult drink four to five cups of tea a day. So there has been a strong demand for the development of a technology making it possible for a high concentration of catechins to be incorporated in a beverage so that catechins can be digested in a large amount.
Among such technologies is a method designed to incorporate molten catechins in a beverage by using a concentrate of a green tea extract (Patent Document 3). However, some of the beverages containing catechins in high concentration, such as sports drinks and black tea beverages with high concentrate catechins, are known to bring in an enormous damage to their commercial value due to the residual bitterness/astringency and miscellaneous tastes caused by the caffeine and other ingredients derived from green tea.
When stored at low temperature, a tea beverage, particularly a black tea beverage, is generally prone to develop a suspension phenomenon, i.e., a phenomenon of forming a tea cream. As a method of suppressing generation of the tea cream, treatment of a tea extract solution with an enzyme having a tannase activity is known (Patent Document 4). Moreover, it is known that bitterness/astringency of a catechin-containing green tea extract can be reduced by treating it with an enzyme having a tannase activity, thereby reducing a gallate content in the catechins (Patent Documents 5 and 6). As a method of removing caffeine or foreign substances from a green tea extract, the adsorption method (Patent Documents 7 and 8), and the extraction method (Patent Document 9) are known.

[Patent Document 1] JP-A-60-156614
[Patent Document 2] JP-A-3-133928
[Patent Document 3] JP-A-59-219384
[Patent Document 4] JP-A-51-115999
[Patent Document 5] JP-2004-321105
[Patent Document 6] JP-A-2005-130809
[Patent Document 7] JP-A-6-142405
[Patent Document 8] JP-A-2004-222719
[Patent Document 9] JP-A-2005-270094

[Summary of the Invention]

The present invention provides a process for producing a purified green tea extract, which includes mixing a green tea extract treated with an enzyme having a tannase activity in a mixed solution containing an organic solvent and water at a mass ratio exceeding 90/10 and not greater than 97/3, and separating, from the mixture, a precipitate thus formed.
The present invention also provides a purified green tea extract (a) containing non-polymer catechins having a solid content of from 20 to 90 mass% o, (b) having a gallate percentage, in the non-polymer catechins, of from 0 to 50 mass%, (c) having a caffeine/non-polymer catechin mass ratio of from 0 to 0.25, and (d) having a (protein + dietary fiber)/non-polymer catechin mass ratio of 0.12 or less; and a packaged beverage containing the purified green tea extract.

[Detailed Description of the Invention]

The conventional treatments of a green tea extract with an enzyme having a tannase activity has the problem such that although bitterness/astringency is reduced thereby, it is impossible to reduce the amount of miscellaneous substances such as dietary fiber in the extract, so that miscellaneous tastes derived from green tea remain and improvement of the total taste is hampered. Moreover, during the treatment with an enzyme having a tannase activity, tannase mixed in the extract solution is deactivated by heat treatment or the like and a protein derived from the deactivated enzyme remains in the green tea extract after treatment. The protein is an allergic substance which has become a problem in recent years, so that there is a demand for a method capable of reducing proteins derived from the enzyme or green tea. Also the method of removing caffeine or foreign substances from a green tea extract has the problem such that although it succeeds in reduction of miscellaneous tastes due to caffeine or foreign substances, it does not succeed in reduction of bitterness/astringency.

The present invention provides a process of efficiently preparing a purified green tea extract having a high concentration of non-polymer catechins, having improved taste because bitterness/astringency and miscellaneous tastes due to dietary fiber derived from green tea are reduced, having a reduced protein content, and easy to drink.

With a view to simultaneously overcoming two conflicting problems, that is, improvement in an extraction efficiency of non-polymer catechins and reduction in a protein content, bitterness/astringency, and miscellaneous tastes, the present inventors have found that non-polymer catechins can be extracted efficiently by treating a green tea extract with an enzyme having a tannase activity, mixing the resulting extract in a mixed solution containing an organic solvent and water at a predetermined ratio, and separating, from the resulting mixture, a precipitate thus formed and that in the extract thus obtained, bitterness/astringency and miscellaneous tastes due to dietary fiber derived from green tea are reduced greatly and moreover, a protein content is reduced.

The purified green tea extract of the present invention can be prepared by a simple preparation process and the purified green tea extract thus obtained has still a high non-polymer catechin concentration in spite of a drastic reduction in miscellaneous tastes and bitterness/astringency and a reduction in a protein content, and has a good color tone. A packaged beverage containing the purified green tea extract is easy to drink because it has neither miscellaneous tastes nor bitterness/astringency derived from green tea and has a clear and stable appearance.

The green tea extract to be used as a raw material in the present invention contains at least one of non-polymer catechins. The term "non-polymer catechins" as used herein is a generic term, which collectively encompasses non-epicatechins such as catechin, gallocatechin, catechin gallate, and gallocatechin gallate, and epicatechins such as epicatechin, epigallocatechin, epicatechin gallate, and epigallocatechin gallate.

The term "non-polymer catechin gallates" as used herein is a generic term, which collectively encompasses four gallates, that is, catechin gallate, gallocatechin gallate, epicatechin gallate, and epigallocatechin gallate. The term "gallate percentage" means a percentage of the total mass of the four non-polymer catechin gallates relative to the total mass of catechin, gallocatechin, catechin gallate, gallocatechin gallate, epicatechin, epigallocatechin, epicatechin gallate, and epigallocatechin gallate.

The green tea extract to be used in the present invention is an extract solution obtained from tea leaves such as green tea, black tea, and Oolong tea. An extract obtained using tea leaves subjected to contact processing with supercritical carbon dioxide may be employed. In addition, mixtures of a tea extract with caffeine derived from a caffeine-containing plant such as coffee can also be employed. They may be concentrated or dried. Specific examples of tea leaves used in the present invention include raw tea leaves available from the Genus *Camellia,* for example, *C. sinensis* and *C. assamica,* and the Yabukita variety, or hybrids thereof, and tea leaves manufactured from these raw tea leaves. Specific examples of the tea leaves manufactured from them include green teas such as sencha (middle-grade green tea), bancha (rough green tea), gyokuro (shaded green tea), tencha (powdered tea) and kamairicha (roasted tea).

Extraction for obtaining a green tea extract from tea leaves is carried out, for example, under stirring while using water or a water soluble organic solvent, or a mixture thereof as an extraction solvent. Upon extraction, an organic acid or an organic acid salt such as sodium ascorbate may be added to the extraction solvent in advance. A process of extracting under so-called non-oxidizing atmosphere, more specifically, extracting while carrying out deaeration by boiling or passing an inert gas such as nitrogen, thereby eliminating dissolved oxygen may be used in combination. An extract obtained in such a manner is used as is or after concentrated or dried. The green tea extract may be in any one of the liquid, slurry, semi-solid and solid forms. When the extraction solvent for tea leaves contains an organic solvent, it is preferably removed before treatment with an enzyme from the viewpoint of preventing deactivation of the enzyme.

As the green tea extract to be used in the present invention, the extract solution from tea leaves may be replaced by a concentrated or dried green tea extract diluted with water or dissolved in water, or a combination of the extract solution from tea leaves and the concentrated or dried green tea extract diluted with water or dissolved in water.

The term "concentrated or dried green tea extract" means a concentrate of an extract of tea leaves with hot water or a water soluble organic solvent. It is prepared by a process as described, for example, in JP-A-59-219384, JP-A-4-20589, JP-A-5-260907, or JP-A-5-306279. More specifically, as the green tea extract, commercially available rough catechin preparations such as "Polyphenon" of Tokyo Food Techno, "THEA-FLAN" of ITO EN, and "Sunphenon" of Taiyo Kagaku can also be used.

In the present invention, the green tea extract is first treated with an enzyme having a tannase activity.

The term "an enzyme having a tannase activity" as used herein means an enzyme having an activity of degrading tannins and an enzyme having such an activity can be used. Although its origin is not particularly limited, examples include tannase available by culturing of tannase-producing microorganisms belonging to genera *Aspergillus, Penicillium, Rhizopus,* and *Mucor* in a conventional manner. The tannase may be either an unpurified product or a purified product. Specific examples of commercially available enzymes having a tannase activity include tannase "Kikkoman" (product of Kikkoman), tannase "Sankyo" (product of Sankyo Lifetech), and Sumiteam TAN (product of SHINNIHON KAGAKU KOGYO). By the treatment with the enzyme having a tannase activity, the ester bond of a gallate in non-polymer catechins is hydrolyzed and a gallate percentage in the non-polymer catechins decreases.

The concentration of the non-polymer catechins when the green tea extract is treated with the enzyme having a tannase activity is preferably from 0.1 to 22 mass%, more preferably from 0.25 to 18 mass%, even more preferably from 0.5 to 16.5 mass%. The concentration less than 0.1 mass% is not preferred from the viewpoint of productivity because a burden on a subsequent concentration step is unduly large. The concentration exceeding 22 mass%, on the other hand, is not preferred from the viewpoint of productivity and taste of the green tea extract, because it takes long time to complete hydrolysis treatment. Treatment with the enzyme having a tannase activity is carried out specifically in the following manner. In order to reduce the amount of the non-polymer catechin gallates and to terminate an enzyme reaction at an optimum non-polymer catechin gallate percentage, the enzyme having a tannase activity in the powder or solution form is added to the green tea extract so that it falls within a range of preferably from 1 to 300 Unit/g of the non-polymer catechins, more preferably from 3 to 200 Unit/g of the non-polymer catechins, even more preferably from 5 to 150 Unit/g of the non-polymer catechins. The term "1 Unit" as used herein means an amount of an enzyme for hydrolyzing 1 μmol of an ester bond contained in tannic acid in water of 30°C. During the enzyme treatment, the temperature is retained at preferably from 5 to 60°C, more preferably from 10 to 50°C, even more preferably from 10 to 45°C.

In the treatment of the present invention with the enzyme having a tannase activity, the non-polymer catechin gallate percentage is reduced by preferably 5 mass% or greater from the viewpoint of reducing bitterness/astringency. If it is less than 5 mass%, the amount of the non-polymer catechin gallate is not reduced sufficiently and an effect of the treatment for reducing bitterness/astringency cannot be expected. From the viewpoint of suppressing bitterness/astringency, the gallate percentage in the non-polymer catechins in the green tea extract is preferably from 0 to 50 mass%. More preferably, it is controlled to fall within a range of from 5 to 48 mass%. In the control of the gallate percentage by the treatment with the enzyme having a tannase activity, a terminal point of the reaction is preferably determined by the pH of the green tea extract at the time of the treatment. The pH at the terminal point of the reaction is preferably from 3.0 to 6.0, more preferably from 3.3 to 5.3.

The hydrolysis reaction with the enzyme is terminated by deactivation of an enzyme activity. The temperature for deactivating the enzyme is preferably from 60 to 100°C, more preferably from 75 to 95°C. When the deactivation temperature is less than 60°C, it is difficult to deactivate the enzyme sufficiently in a short time so that reaction still proceeds and the enzyme reaction cannot be terminated within a desired non-polymer catechin gallate percentage. The retention time after the temperature reaches the deactivation temperature is preferably from 10 to 1800 seconds, more preferably from 30 to 1200 seconds, even more preferably from 30 to 600 seconds from the viewpoint of enzyme deactivation and taste. The enzyme is deactivated, for example, by batch heating or continuous heating while holding it by using a plate type heat exchanger or holding tube.

Before or after the enzyme treatment, the green tea extract solution is preferably centrifuged to remove therefrom fine powder remaining in the extract solution. A centrifuge used for it has preferably an enough centrifugal force to remove fine powder. Industrially, a continuous centrifuge suited for treatment of a large amount of the extract solution is used

The green tea extract treated with the enzyme having a tannase activity is then preferably concentrated under reduced pressure or concentrated by the treatment with a reverse osmotic membrane. It may be, for example, spray dried or freeze dried if necessary. The green tea extract after the enzyme treatment may be in the form of a liquid, a slurry, a semi-solid, or a solid. From the viewpoint of dispersibility in an organic solvent such as ethanol, it is preferably in the form of a slurry, a semi-solid, or a solid. As the green tea extract of the present invention treated with the enzyme having a tannase activity, a mixture obtained by mixing the green tea extract treated with the enzyme having a tannase activity with an untreated green tea extract and having a non-polymer catechin gallate percentage within a range of from 0 to 50 mass% may be used.

The purified green tea extract of the present invention can be prepared by mixing the green tea extract treated with the enzyme having a tannase activity in a mixed solution containing an organic solvent and water at a mass ratio exceeding 90/10 and not greater than 97/3 and then separating, from the resulting mixture, a precipitate thus formed.

Examples of the organic solvent to be used for the preparation of the purified green tea extract of the present invention include ethanol, methanol, acetone, and ethyl acetate. Of these, hydrophilic organic solvents such as methanol, ethanol, and acetone are preferred, of which ethanol is highly preferred in consideration of the addition to food. As water, ion exchanged water, tap water, and natural water can be used. Although the organic solvent and water may be mixed in advance or individually mixed with the green tea extract, they are preferably mixed with the green tea extract as a mixed solution.

In the present invention, when the green tea extract is dispersed in the mixed solution of an organic solvent and water, an organic solvent/water mass ratio is adjusted to fall within a range exceeding 90/10 and not greater than 97/3, preferably from 92/8 to 97/3, even more preferably from 92/8 to 95/5 from the viewpoint of an extraction efficiency of non-polymer catechins and taste. The precipitate formed by mixing is removed in a known manner such as filtration.

In the present invention, treatment can be efficiently conducted by adding from 10 to 40 parts by mass, preferably from 10 to 30 parts by mass, each in terms of a dry mass, of the green tea extract to 100 parts by mass of the mixed solution of an organic solvent and water.

In the present invention, no particular limitation is imposed on the mixing method of the green tea extract in the mixed solution of an organic solvent and water. It is only necessary that the organic solvent/water mass ratio falls within a range exceeding 90/10 and not greater than 97/3 at the time of the final treatment of the non-polymer catechin composition. For example, the organic solvent/water mass ratio may be adjusted to fall within a range exceeding 90/10 and not greater than 97/3 by adding the organic solvent after dissolution of the green tea extract in water, or by adding water in portions after suspending the green tea extract in the organic solvent. From the viewpoint of extraction efficiency, addition of the organic solvent after the green tea extract is dissolved in water is preferred. The time necessary for adding water and the organic solvent individually or as a mixture is from about 10 to 60 minutes and it is preferred to add them dropwise slowly. Dropwise addition under stirring is preferred in order to raise the extraction efficiency of catechins. It is more preferred to have an aging time of from about 10 to 600 minutes after completion of the dropwise addition. These treatments can be performed at from 10 to 60°C, preferably from 10 to 50°C, more preferably from 10 to 40°C. The green tea extract may be added in one portion or may be added in two or more portions, for example, in two to four portions. The precipitate thus formed is removed by filtration or the like method.

After removal, it is preferred to add water to the mixed solution and/or remove the organic solvent from the mixed solution so that the organic solvent/water mass ratio in the mixed solution from which the precipitate has been removed falls within a range of from 40/60 to 70/30, preferably from 45/55 to 60/40. A content of the organic solvent in the mixed solution is reduced by distilling off the organic solvent, for example, by distillation under reduced pressure. When water is added to the mixed solution from which the precipitate has been removed, water such as ion exchanged water, tap water, and natural water is added.

The aging time for precipitating a turbidity component after addition of water and/or removal of the organic solvent is not particularly limited. It is, for example, preferably from 2 minutes to 50 hours, more preferably from 2 minutes to 24 hours, even more preferably from 5 minutes to 6 hours. The precipitation temperature of the turbidity component is preferably from -15 to 78°C, more preferably from -5 to 40°C, even more preferably from 5 to 25°C. After precipitation of the turbidity component, the turbidity component is separated from the mixed solution at a temperature preferably from -15 to 78°C, more preferably from -5 to 40°C, even more preferably from 5 to 25°C. The temperature outside this range deteriorates the separability and may sometimes cause a change in the appearance of the solution. No particular limitation is imposed on the separation method of the turbidity component and, for example, centrifugal separation and filtration may be employed.

In the present invention, in order to remove caffeine if necessary, it is preferred to bring the green tea extract into contact with an activated carbon and/or an acid clay or an activated clay when the extract is mixed in the mixed solution of an organic solvent and water.

Any activated carbon can be used without particular limitation insofar as it is ordinarily-used industrial-level one. Commercially available products such as "ZN-50" (product of Hokuetsu Tansosha), "KURARAY COAL GLC", "KURARAY COAL PK-D" and "KURARAY COAL PW-D" (each, product of KURARAY CHEMICAL), and "Shirasagi AW50", "Shirasagi A", "Shirasagi M" and "Shirasagi C" (each, product of Takeda Pharmaceutical) can be used. An activated carbon has preferably a micropore volume of from 0.01 to 0.8 mL/g, more preferably from 0.1 to 0.7 mL/g, while it has preferably a specific surface area of from 800 to 2000 $m^2$/g, more preferably from 900 to 1600 $m^2$/g. These physical properties are values based on the nitrogen adsorption method.

The activated carbon is added preferably in an amount of from 0.5 to 15 parts by mass, more preferably from 0.5 to 10 parts by mass, even more preferably from 1.0 to 8 parts by mass to 100 parts by mass of the mixed solution of an organic solvent and water. Unduly small amounts of the activated carbon deteriorate the caffeine removal efficiency, while unduly large amounts of it increase the cake resistance during filtration. Amounts outside the above-described range are therefore not preferred.

An acid clay or an activated clay to be used for the preparation contains, as typical chemical components, $SiO_2$, $Al_2O_3$, $Fe_2O_3$, CaO, MgO and the like. Its $SiO_2$/$Al_2O_3$ ratio is preferably from 3 to 12, more preferably from 4 to 9. A composition containing from 2 to 5 mass% of $Fe_2O_3$, from 0 to 1.5 mass% of CaO, and from 1 to 7 mass% of MgO is preferred. An activated clay is a compound obtained by treating naturally occurring acid clay (montmorillonite clay) with a mineral acid such as sulfuric acid and having a porous structure with a large specific surface area and adsorption capacity. It is known that further acid treatment of an acid clay changes its specific surface area, thereby improving the decoloring capacity and changing the physical properties.

The specific surface area of the acid clay or activated clay differs depending on the degree of acid treatment, but is preferably from 50 to 350 $m^2$/g. Its pH (of a 5 mass% suspension) is preferably from 2.5 to 8, more preferably from 3.6 to 7. For example, commercially available "Mizuka Ace #600" (product of Mizusawa Industrial Chemicals) is usable as the acid clay.

The acid clay or activated clay is added preferably in an amount of from 0.5 to 30 parts by mass, more preferably from 1.5 to 20 parts by mass, even more preferably from 2.5 to 15 parts by mass to 100 parts by mass of the mixed solution of an organic solvent and water. Unduly small amounts of the acid clay or activated clay deteriorate the caffeine removal efficiency, while unduly large amounts increase the cake resistance during filtration. Amounts outside the above-described range are therefore not preferred.

When the activated carbon is used in combination with the acid clay or the activated clay, the acid clay or activated clay may be used preferably at a mass ratio of from 1 to 10 relative to the activated carbon, with an activated carbon: acid clay or activated clay mass ratio of from 1:1 to 1:6 being more preferred.

In the present invention, in order to selectively remove caffeine if necessary, it is preferred to bring the green tea extract into contact with the activated carbon and/or the acid clay or the activated clay when the extract is mixed in the mixed solution of an organic solvent and water. In this case, no particular limitation is imposed on the contact order of the green tea extract, the mixed solution of an organic solvent and water, and the activated carbon and/or the acid clay or the activated clay. Examples include (1) a method of adding the green tea extract to the mixed solution of an organic solvent and water and then bringing the resulting mixture into contact with the activated carbon and then, the acid clay or the activated clay; (2) a method of adding the green tea extract to the mixed solution of an organic solvent and water and then bringing the resulting mixture into contact with the acid clay or the activated clay, and then with the activated carbon; and (3) a method of adding the activated carbon to the mixed solution of an organic solvent and water, adding the green tea extract to the resulting mixture, and then adding the acid clay or the activated clay. Preferred is (4) a method of adding the acid clay or the activated clay to the mixed solution of an organic solvent and water, adding the green tea extract to the resulting mixture, and then adding activated carbon.
Between the addition of each component and addition of the next component, filtration is preferably performed. When the green tea extract is added in two or more portions, filtration may be performed between them.

When the green tea extract is brought into contact and mixed with a dispersion of the acid clay or activated clay in the mixed solution of an organic solvent and water, the pH at the time of contact is preferably adjusted to from 3 to 6, because it enables efficient extraction of non-polymer catechins and preparation of a purified green tea extract. At the time of contact, addition of an organic acid such as citric acid, lactic acid, tartaric acid, succinic acid or malic acid at a mass ratio of the organic acid to non-polymer catechins (an organic acid/non-polymer catechin mass ratio) of from 0.02 to 0.20 is preferred.

When the green tea extract is brought into contact and mixed with the dispersion of the acid clay or activated clay in the mixed solution of an organic solvent and water, it is preferred to first set the temperature of the dispersion upon contact at from 10 to 30°C and then, increase it to from 20 to 60°C, because it enables acceleration of the dissolution of the green tea extract and also acceleration of the catechin extraction efficiency in the dispersion.

In the present invention, after the green tea extract is mixed in the mixed solution containing an organic solvent and water at a mass ratio exceeding 90/10 and not greater than 97/3 and a precipitate thus formed is then removed, water is added to the mixed solution and/or the organic solvent is removed from the mixed solution so as to adjust the organic solvent/water mass ratio in the mixed solution to from 40/60 to 70/30, preferably from 45/55 to 60/40 as needed and then, a turbidity component thus precipitated is separated.
More specifically, when the green tea extract is brought into contact and mixed with the activated carbon and/or the acid clay or activated clay, it is preferred to mix the green tea extract in the mixed solution containing an organic solvent and water at a mass ratio exceeding 90/10 and not greater than 97/3, bringing the resulting mixture into contact with the activated carbon and/or the acid clay or activated clay, removing both a precipitate thus formed and the activated carbon and/or the acid clay or activated clay, adding water to the filtrate and/or removing the organic solvent from the filtrate, and then separating a turbidity component thus precipitated. The contact with the activated carbon may be performed before the step of addition of water and/or removal of the organic solvent, or may be performed after addition of water and/or removal of the organic solvent and separation of the turbidity component thus precipitated.

The contact of the green tea extract solution with the activated carbon and the acid clay or activated clay may be performed by either one of batch system or continuous treatment using a column. Typical methods include a method of adding the activated carbon in the powder form to the green tea extract solution, stirring the mixture, selectively adsorbing caffeine to the activated carbon, and obtain a caffeine-free filtrate by filtration; and a method of selectively adsorbing caffeine to a column filled with the activated carbon in the granular form by continuous treatment. The contact between the green tea extract and the activated carbon is preferably performed by continuous treatment using an activated carbon column.

In the present invention, the green tea extract treated with the enzyme having a tannase activity is mixed in the mixed solution containing an organic solvent and water at a mass ratio exceeding 90/10 and not greater than 97/3 and then, a precipitate thus formed is separated. If necessary, water is added to the mixed solution and/or the organic solvent is removed from the mixed solution after separation of the precipitate to adjust the organic solvent/water mass ratio in the mixed solution to fall within a range of from 40/60 to 70/30 and then, a turbidity component thus precipitated is separated. Then, contact treatment with the activated carbon and the acid clay or activated clay can be performed. The organic solvent can be removed from the green tea extract solution, for example, by distillation under reduced pressure. The green tea extract after the treatment may be either in the liquid form or solid form. When the green tea extract is obtained in the solid form, it may be converted into powder by freeze drying or spray drying.

The purified green tea extract contains, in the solid content thereof, preferably from 20 to 90 mass%, more preferably from 30 to 90 mass%, even more preferably from 35 to 90 mass% of non-polymer catechins. A non-polymer catechin gallate percentage in the purified green tea extract is preferably from 0 to 50 mass%, more preferably from 5 to 48 mass%. Moreover, with regard to the caffeine concentration in the purified green tea extract, a caffeine/non-polymer catechin mass ratio is preferably from 0 to 0.25, more preferably from 0 to 0.18, even more preferably from 0 to 0.12. With regard to the concentration of (protein + dietary fiber) in the purified green tea extract, a (protein + dietary fiber) /non-polymer catechin mass ratio is preferably 0.12 or less, more preferably 0.1 or less.

Although in the purified green tea extract, bitterness/astringency and miscellaneous tastes due to dietary fiber derived from green tea are reduced greatly and a protein content is also reduced, the purified green tea extract still has a high non-polymer catechin concentration and at the same time has a good color tone. The purified green tea extract is therefore useful as a packaged beverage, particularly useful as tea beverages such as green tea, Oolong tea, blend tea, black tea and barley tea, and non-tea beverages such as sports drink, isotonic drink, and near water.

The packaged beverage of the present invention contains the non-polymer catechins, which have been dissolved in water, in an amount of from 0.03 to 1.0 mass%, preferably from 0.04 to 0.5 mass%, more preferably from 0.06 to 0.4 mass%, even more preferably from 0.07 to 0.4 mass%, even more preferably from 0.08 to 0.3 mass%, even more preferably from 0.09 to 0.3 mass%, even preferably from 0.1 to 0.3 mass%. The non-polymer catechin contents falling within the above-described ranges are preferred from the viewpoint of easy ingestion of a large amount of the non-polymer catechins and color tone of the beverage just after preparation. The concentration of the non-polymer catechins can be adjusted by the amount of the purified green tea extract treated with the enzyme having a tannase activity.

The non-polymer catechin gallate percentage of the packaged beverage containing the purified green tea extract treated with the enzyme having a tannase activity according to the present invention is preferably from 0 to 63 mass%, more preferably from 5 to 56 mass%, even more preferably from 5 to 48 mass%. With regard to the concentration of caffeine, a caffeine/non-polymer catechins ratio is preferably from 0 to 0.25, more preferably from 0 to 0.18, even more preferably from 0 to 0.12. The gallate percentage or caffeine concentration can also be controlled by adding another green tea extract or green tea extract solution.

The packaged beverage of the present invention may contain a sodium ion and/or a potassium ion. The beverage of the present invention having such an ion incorporated therein is useful as a drink type such as sports drink and isotonic drink. The term "sports drink" is generally defined as a drink capable of rapidly replenishing, after exercise, water and minerals lost as sweat.

Sodium and potassium are primary physiological electrolytes. These ion components can be incorporated in the packaged beverage by adding water soluble components or inorganic salts corresponding to them. They are also present in juices and green tea extracts. The amount of an electrolyte or ion component in the beverage of the present invention is its content in the final packaged beverage provided for drinking. The concentration of each electrolyte is expressed in terms of ion concentration. A potassium ion component may be mixed in the form of a salt such as potassium chloride, potassium carbonate, potassium sulfate, potassium acetate, potassium hydrogencarbonate, potassium citrate, potassium phosphate, potassium hydrogenphosphate, potassium tartrate or potassium sorbate, or a mixture thereof, or as a component of a fruit juice or tea added. The packaged beverage of the present invention contains a potassium ion in an amount of preferably from 0.001 to 0.2 mass%, more preferably from 0.002 to 0.15 mass%, even more preferably from 0.003 to 0.12 mass%. A sodium ion component may be mixed in the form of an easily available sodium salt such as sodium chloride, sodium carbonate, sodium hydrogencarbonate, sodium citrate, sodium phosphate, sodium hydrogenphosphate, sodium tartrate, or sodium benzoate or a mixture thereof, or as a component of a fruit juice or tea added. A lower sodium concentration is preferred in order to facilitate absorption of water by osmotic pressure, because it does not cause suction of water from the body to the intestine by osmotic pressure. The concentration of sodium necessary for it is preferably lower than the plasma sodium. The packaged beverage of the present invention contains a sodium ion in an amount of preferably from 0.001 to 0.5 mass%, more preferably from 0.002 to 0.4 mass%, even more preferably from 0.003 to 0.2 mass%. The packaged beverage of the present invention may further contain, in addition to potassium and sodium ions, chloride ions in an amount of from 0.001 to 0.5 mass%, preferably from 0.002 to 0.4 mass%, more preferably from 0.003 to 0.3 mass%. The chloride ion component may be mixed in the form of a salt such as sodium chloride or potassium chloride. Further, calcium, magnesium, and trace ions such as zinc and iron may also be mixed. These ions may also be mixed in the form of a salt. The total amount of ions present in the beverage includes an amount of ions added and an amount of ions naturally existing in the beverage. When sodium chloride is added, for example, the amount of a sodium ion and the amount of a chloride ion are included in the total amount of ions.

When the sodium ion or potassium ion concentration is unduly small, the resulting beverage does not leave a satisfactory feeling in taste and cannot replenish minerals effectively. When it is unduly large, on the other hand, taste of a salt becomes prominent and such a beverage is not suited for continuous drinking for a long time. The concentrations of the sodium ion or potassium ion outside the above-described range are therefore not preferred.

In the packaged beverage according to the present invention, a sweetener may be added to improve its taste. Usable examples of the sweetener include artificial sweeteners, carbohydrates, and glycerols (for example, glycerin). The content of such a sweetener in the packaged beverage of the present invention is preferably from 0.0001 to 20 mass%, more preferably from 0.001 to 15 mass%, even more preferably from 0.001 to 10 mass%. When the amount of the sweetener is below the above-described lower limit, the beverage has almost no sweet taste and it loses a balance among sweetness, sourness and saltiness. When the amount of the sweetener exceeds the upper limit, on the other hand, the sweetness gets stuck in the throat and deteriorates smooth drinking.

As sweeteners usable in the packaged beverage of the present invention, artificial sweeteners are preferred. Artificial sweeteners usable in the present invention include, for example, high-sweetness sweeteners such as saccharin, saccharin sodium, aspartame, acesulfame-K, sucralose, and neotame; and sugar alcohols such as sorbitol, erythritol and xylitol. As commercial products, "SLIM-UP SUGAR" composed of aspartame, "LAKANTO-S" containing erythritol, and "PALSWEET" composed of erythritol and aspartame are usable.

When the packaged beverage of the present invention is an energy boosting one, a carbohydrate sweetener is preferably used.

The carbohydrate sweetener usable in the present invention is a soluble carbohydrate. The soluble carbohydrate plays a dual role as a sweetener and an energy source. In selecting a carbohydrate for use in the beverage of the present invention, it is preferred to consider a gastric emptying rate and an intestinal absorption rate.

The carbohydrate may be a mixture of glucose and fructose, a carbohydrate hydrolyzable in the digestive tract, or a carbohydrate constituting glucose and fructose. The term "carbohydrate" as used herein embraces monosaccharides, disaccharides, oligosaccharides, and complex polysaccharides, and mixtures thereof.

Monosaccharides usable here include, for example, tetroses, pentoses, hexoses, and ketohexoses. Examples of the hexoses include aldohexoses such as glucose known as grape sugar. The content of glucose in the packaged beverage of the present invention is preferably from 0.0001 to 20 mass%, more preferably from 0.001 to 15 mass%, even more preferably from 0.001 to 10 mass%. Fructose known as fruit sugar is a ketohexose. The content of fructose in the packaged beverage of the present invention is preferably from 0.0001 to 20 mass%, more preferably from 0.001 to 15 mass%, even more preferably from 0.001 to 10 mass%.

In the beverage of the present invention, single use of the artificial sweetener, or combined use of the artificial sweetener and a glucose compound or the artificial sweetener and a fructose compound is preferred.

As the carbohydrate sweetener, a soluble carbohydrate can be used in the present invention. Examples of the oligosaccharide include carbohydrates (that is, sucrose, maltodextrin, corn syrup, and fructose-rich corn syrup) capable of forming these two monosaccharides in vivo. Disaccharides are important as oligosaccharides. Examples of the disaccharide include sucrose known as cane sugar or beet sugar. The content of sucrose in the packaged beverage of the present invention is preferably from 0.001 to 20 mass%, more preferably from 0.001 to 15 mass%, even more preferably from 0.001 to 10 mass%.

The packaged beverage of the present invention has preferably a pH of from 2 to 7, more preferably from 2 to 6.5, even more preferably from 3 to 4.5 from the viewpoint of stability of catechins. The beverage having an unduly low pH has strong sourness and emits an offensive odor. When the beverage has an unduly high pH, on the other hand, it loses balance of taste and preference for it lowers. The pH outside the above-described range is therefore not preferred.

Incorporation of a bitterness/astringency suppressor in the packaged beverage of the present invention is preferred because it smoothens drinking. Although no particular limitation is imposed on the bitterness/astringency suppressor, a cyclodextrin is preferred. As the cyclodextrin, an $\alpha$-, $\beta$- or $\gamma$-cyclodextrin or a branched $\alpha$-, $\beta$- or $\gamma$-cyclodextrin may be used. In the beverage, a cyclodextrin may be incorporated preferably in an amount of from 0.005 to 0.5 mass%, preferably from 0.01 to 0.3 mass%. The packaged beverage of the present invention may contain, either singly or in combination, additives such as antioxidants, flavors, various esters, organic acids, organic acid salts, inorganic acids, inorganic acid salts, inorganic salts, colorants, emulsifiers, preservatives, seasoning agents, sweeteners, acidulants, gums, emulsifiers, oils, vitamins, amino acids, fruit juice extracts, vegetable extracts, flower honey extracts, pH regulators, quality stabilizers, and the like.

In the beverage of the present invention, flavors and fruit juices are preferably incorporated to improve its taste. Natural or synthetic flavors and fruit juices may be used in the present invention. They can be selected from fruit juices, fruit flavors, and plant flavors, and mixtures thereof. For the development of attractive taste, preferred are combinations of fruit juice and tea flavor, preferably green tea or black tea flavor. Preferred examples of the fruit juice include apple, pear, lemon, lime, mandarin, grapefruit, cranberry, orange, strawberry, grape, kiwi, pineapple, passion fruit, mango, guava, raspberry and cherry juices. Of these, citrus juices, preferably, grapefruit, orange, lemon, lime, and mandarin juices, mango juice, passion fruit juice and guava juice are preferred, with the mixtures thereof being more preferred. Preferred examples of natural flavors include jasmine, chamomile, rose, peppermint, Crataegus cuneata, chrysanthemum, water caltrop, sugarcane, lychee, and bamboo shoot. The juice is incorporated in the beverage of the present invention preferably in an amount of from 0.001 to 20 mass%, more preferably from 0.002 to 10 mass%. Fruits flavor, plant flavor, and tea flavor, and mixtures thereof may also be used as the juice. Highly preferred flavors include citrus flavors such as orange flavor, lemon flavor, lime flavor, and grapefruit flavor. In addition to such citrus flavors, various other fruits flavors such as apple flavor, grape flavor, raspberry flavor, cranberry flavor, cherry flavor, and pineapple flavor are also usable. These flavors may be derived from natural sources such as fruit juices and balms, or may be synthesized.

The "flavor" as used herein embraces blends of various flavors, for example, a blend of lemon and lime flavors and a blend of a citrus flavor and selected spice. Such a flavor may be mixed preferably in an amount of from 0.0001 to 5 mass%, more preferably from 0.001 to 3 mass% in the beverage of the present invention.

The packaged beverage according to the present invention may also contain an acidulant as needed. Examples of the acidulant include edible acids such as malic acid, citric acid, tartaric acid and fumaric acid. The acidulant may also be used to regulate the pH of the beverage of the present invention. The beverage of the present invention has preferably a pH of from 2 to 7. As a pH regulator, an organic or inorganic edible acid may be used. The acid may be used either in a non-dissociated form or in the form of its salt such as potassium or sodium hydrogenphosphate or potassium or sodium dihydrogenphosphate. Preferred acids include edible organic acids such as citric acid, malic acid, fumaric acid, adipic acid, phosphoric acid, gluconic acid, tartaric acid, ascorbic acid, acetic acid, and malic acid, and mixtures thereof, with citric acid and malic acid being more preferred. The acidulant is also useful as an antioxidant for stabilizing the components in the beverage. Examples of commonly employed antioxidants include ascorbic acid and EDTA (ethylenediaminetetraacetic acid) and salts thereof, and plant extracts.

The beverage of the present invention may contain vitamins further. Preferred vitamins include vitamin A and vitamin E. Other vitamins such as vitamin D and vitamin B may also be added. Minerals may also be incorporated in the beverage of the present invention. Preferred minerals include calcium, chromium, copper, iron, magnesium, manganese, phosphorus, selenium, silicon, molybdenum, and zinc. Of these, magnesium, phosphorus, and iron are more preferred.

Similar to typical beverages, the packaged beverage of the invention can be provided as a beverage packed in a molded package having polyethylene terephthalate as a principal component (a so-called PET bottle), a metal can, a paper container combined with a metal foil or plastic film, a bottle or the like. The term "packaged beverage" as used herein means a beverage that can be consumed without dilution.

The packaged beverage of the present invention can be produced, for example, by filling the beverage in a container such as a metal can and, when heat sterilization is feasible, conducting heat sterilization under sterilization conditions as prescribed in the Food Sanitation Act of Japan. When the package is not suited for retort sterilization such as PET bottles and paper containers, employed is a process of subjecting the beverage to high-temperature short-time sterilization, for example, by a plate-type heat exchanger under similar sterilization conditions to those described above, cooling the resulting beverage to a predetermined temperature and then filling the beverage in a package. Under aseptic conditions, another component may be filled in the container which has already contained the beverage. After heat sterilization under acidic conditions, the pH of the beverage may be brought back to neutral under aseptic conditions or after heat sterilization under neutral conditions, the pH of the beverage may be brought back to acidic under aseptic conditions.

[Examples]

Measurement of Non-polymer Catechins

A non-polymer catechin content of a non-polymer catechin composition, which has been diluted with distilled water and then filtered through a filter (0.8 $\mu$m), is measured by high-performance liquid chromatograph ("SCL-10AVP", product of Shimadzu Corporation) equipped with "L-Column TM ODS" (packed column for octadecyl-introduced liquid chromatograph, 4.6 mm$\phi$ $\times$ 250 mm: product of Chemicals Evaluation and Research Institute, Japan) at a column temperature of 35°C by a gradient method using Solution A and Solution B. Measurement is conducted under the following conditions: use of a solution of 0.1 mol/L of acetic acid in distilled water as a mobile phase solution A and a solution of 0.1 mol/L of acetic acid in acetonitrile as a mobile phase solution B, an injection amount of a sample: 20 $\mu$L, and a wavelength of UV detector at 280 nm.

Measurement of Caffeine

(Analyzer)

HPLC (product of Hitachi, Ltd.) is employed.
Plotter: "D-2500", Detector: "L-4200"
Pump: "L-7100", Autosampler: "L-7200"
Column: "Inertsil ODS-2", 2.1 mm inner diameter $\times$ 250 mm length

(Analytical conditions)

Injection amount of sample: 10 µL, flow rate: 1.0 mL/min Detection wavelength of ultraviolet absorptiometer: 280 nm Eluent A: aqueous solution of 0.1 mol/L acetic acid, Eluent B: acetonitrile solution of 0.1 mol/L acetic acid Concentration gradient conditions (vol.%)

| Time | Eluent A | Eluent B |
|---|---|---|
| 0 minute | 97% | 3% |
| 5 minutes | 97% | 3% |
| 37 minutes | 80% | 20% |
| 43 minutes | 80% | 20% |
| 43.5 minutes | 0% | 100% |
| 48.5 minutes | 0% | 100% |
| 49 minutes | 97% | 3% |
| 62 minutes | 97% | 3% |
| (Retention time of caffeine) | | |
| Caffeine: 27.2 minutes | | |

The mass% is determined from the area % based on the standard substance.

<u>Evaluation of Color tone</u>

The purified green tea extract is diluted with ion exchanged water to give a non-polymer catechin concentration of 180 mg/100 mL and the appearance of the sample thus obtained is visually evaluated.

<u>Visual Evaluation of Stability</u>

The purified green tea extract is diluted with ion exchanged water to give a non-polymer catechin concentration of 100 mg/100 mL. After the sample thus obtained for evaluation is filled in a 50 mL vial bottle, its state is observed on an illuminator and visually evaluated.

<u>Evaluation of Purified Product</u>

(Evaluation of taste)

The purified green tea extract is diluted with ion exchanged water to give a non-polymer catechin concentration of 180 mg/100 mL and miscellaneous tastes and bitterness/astringency of the diluted extract are evaluated by a panel of five experts.

<u>Measurement of Protein and Free Amino Acid</u>

```
    Calculating formula of (amount of protein + free amino acid): (total nitrogen in a purified green tea

extract - caffeine nitrogen) × conversion factor
```

Determination Method of Total Nitrogen:

Total nitrogen is determined by the nitrogen determination conversion method (macro Kjeldahl method) in accordance with the analysis method of nutrients in nutritional labeling standards (Notification No. 146 of the Ministry of Health, Labor and Welfare issued May 1996) (a method presented in the third column of the first appendix of Nutritional labeling Standards).

Caffeine Nitrogen:

Caffeine nitrogen is determined by converting the amount of caffeine as determined by the measurement method described in Column (0061) into the nitrogen molecular weight (Mw=54) in the molecular weight of caffeine (Mw=194).

Conversion Coefficient:

A conversion coefficient (6.25) in accordance with the analysis method of nutrients in nutritional labeling standards (Notification No. 146 of the Ministry of Health, Labor and Welfare issued May 1996) (a method presented in the third column of the first appendix of Nutritional labeling Standards) is used.

Measurement of Free Amino Acid

Free Tryptophan

(Analyzer)

Model: "LC-10AD" (Shimadzu Corporation)
Detector: "RF-10Ax1", a fluorescent spectrophotometer ×1
Column: "Inertsil ODS-2", 4.6 mm inner diameter × 250 mm length
Free Amino Acids Other Than Free Tryptophan

(Analyzer)

Model: "L-8800 high-speed amino acid analyzer" (product of Hitachi, Ltd.)
Column: "Hitachi Custom Ion Exchange Resin", 4.6 mm inner diameter × 60 mm length
Mobile phase: "L-8500", PF buffer
Reactant: Ninhydrin reagent
The amount of protein is calculated by subtracting the analysis value of free amino acids from the analysis value of (protein + free amino acids).

Measurement of Dietary fiber

The amount of dietary fiber is determined by the enzyme-weight method (Prosky method) in accordance with the analysis method of nutrients in nutritional labeling standards (Notification No. 146 of the Ministry of Health, Labor and Welfare issued May 1996) (a method presented in the third column of the first appendix of Nutritional labeling Standards) is used.

Example 1: Purified green tea extract A

(1) A green tea extract ("Polyphenon HG", product of Tokyo Food Techno, 500 g) was dissolved in 6500 g of water to obtain 7000 g of "green tea extract solution" (pH 5.6) (non-polymer catechin concentration in the green tea extract solution = 2.32 mass%, a gallate percentage of the green tea extract solution = 52.9 mass%, a caffeine content: 0.41 mass%).
The green tea extract solution thus obtained was maintained at 25°C and tannase ("Tannase KTFH", product of Kikkoman, 500 U/g) was added to the green tea extract solution so as to give a concentration of 700 ppm. The resulting mixture was maintained for 30 minutes. When the gallate percentage reached 44.2 mass%, the solution was heated to 90°C and maintained for 2 minutes to deactivate the enzyme and thereby stop the reaction (pH 5.1).

Then, the reaction mixture was concentrated under reduced pressure at 55°C at 2.7 kpa to a Brix concentration of 25%, followed by freeze drying to obtain 485 g of "green tea extract treated with an enzyme having a tannase activity" in the powder form. The green tea extract thus obtained had a non-polymer catechin content of 31.8 mass%, a non-polymer catechin gallate percentage of 44.1 mass%, and a caffeine content of 5.8 mass%.

(2) The green tea extract treated with an enzyme having a tannase activity obtained in (1) (200 g) was poured in 800 g of a 95 mass % aqueous ethanol solution under stirring conditions of 250 r/min. Stirring was continued for about 6 hours (pH 5.0) at a temperature kept at room temperature. Then, a precipitate thus formed was filtered out using a No. 2 filter paper. To the filtrate was added 417 g of ion exchanged water and the resulting mixture was stirred for about 5 minutes under stirring conditions of 100 r/min at 15°C. A turbidity component thus precipitated at an operation temperature of 25°C was centrifugally separated (at 6000 rpm for 5 minutes) from the reaction mixture by using a compact cooling centrifuge (product of Hitachi Koki). To the solution thus separated was added 200 g of ion exchanged water. Ethanol was then distilled off at 40°C and 2.7 kpa, followed by adjustment of a water content to obtain "purified green tea extract".

A non-polymer catechin content in the purified green tea extract was 15 mass%.

A non-polymer catechin content in the solid content of the purified green tea extract was 54.3 mass%.

A caffeine/non-polymer catechin mass ratio in the purified green tea extract = 0.177

A gallate percentage in the purified green tea extract = 45.1 mass%

A (protein + dietary fiber)/non-polymer catechin mass ratio in the purified green tea extract = 0.03

Example 2: Purified green tea extract B

(1) Hot water (90 kg) of 89°C was added to 6 kg of green tea leaves (grown in Kenya, large tea leaves). After batch extraction with stirring for 30 minutes, the reaction mixture was crudely filtered through a 100-mesh sieve and centrifugal operation was carried out to remove fine powder from the extract solution to yield 74.7 kg of "green tea extract" (pH 5.3) (non-polymer catechin concentration in the green tea extract solution = 0.91 mass%, a gallate percentage of the green tea extract solution = 51.2 mass%, caffeine content: 0.17 mass%).

The green tea extract solution thus obtained was maintained at 25°C and tannase ("Tannase KTFH", product of Kikkoman, 500 U/g) was added to the green tea extract solution to give its concentration of 260 ppm. The resulting mixture was maintained for 75 minutes. When the gallate percentage reached 39.6 mass%, the solution was heated to 90°C and maintained at the temperature for 2 minutes to deactivate the enzyme and thereby stop the reaction (pH 5.1). Then, the reaction mixture was concentrated using a reverse osmotic (RO) membrane to a Brix concentration of 25%, followed by spray drying to obtain 1.9 kg g of "green tea extract treated with an enzyme having a tannase activity" in the powder form. The green tea extract thus obtained had a non-polymer catechin content of 30.8 mass%, a non-polymer catechin gallate percentage of 39.4 mass%, and a caffeine content of 6.5 mass%.

(2) After 100 g of acid clay ("Mizuka Ace #600", product of Mizusawa Industrial Chemicals) was dispersed in 800 g of a 92 mass% aqueous ethanol solution under stirring at 250 r/min and the resulting dispersion was stirred for about 10 minutes, 200 g of the green tea extract treated with an enzyme having a tannase activity obtained in (1) was poured in the resulting dispersion. Stirring was continued for about 3 hours (pH 4.0) at a temperature maintained at room temperature. Then, a precipitate thus formed and the acid clay were filtered out using a No. 2 filter paper. To the filtrate was added 417 g of ion exchanged water and the resulting mixture was stirred for about 5 minutes under stirring conditions of 100 r/min at 15°C. The resulting mixture was treated by a compact cooling centrifuge (product of Hitachi Koki) at an operation temperature of 15°C to separate a turbidity component thus precipitated (at 6000 rpm for 5 minutes). The solution thus separated was brought into contact with 30 g of activated carbon ("KURARAY COAL GLC", product of KURARAY CHEMICAL), followed by filtration through a 0.2-μm membrane filter. To the filtrate was added 200 g of ion exchanged water finally and ethanol was distilled off at 40°C and 2.7 kpa. Then, a water content of the residue was adjusted to yield "purified green tea extract".

A non-polymer catechin content in the purified green tea extract was 15 mass%.

A non-polymer catechin content in the solid content of the purified green tea extract was 63.4 mass%.

A caffeine/non-polymer catechin mass ratio in the purified green tea extract = 0.033

A gallate percentage in the purified green tea extract = 38.5%

A (protein + dietary fiber)/non-polymer catechin mass ratio in the purified green tea extract = 0.02

Comparative Example 1: Green tea extract treated with an enzyme having tannase activity

"Green tea extract treated with an enzyme having tannase activity" obtained in (1) of Example 2.

A non-polymer catechin content in the green tea extract was 30.8 mass%.

A caffeine/non-polymer catechin mass ratio in the green tea extract = 0.211
A gallate percentage in the green tea extract = 39.4%
A (protein + dietary fiber)/non-polymer catechin mass ratio in the green tea extract = 0.28

Comparative Example 2

After 100 g of acid clay ("Mizuka Ace #600", product of Mizusawa Industrial Chemicals) was dispersed in 800 g of a 92 mass% aqueous ethanol solution under stirring at 250 r/min at normal temperature and stirring was performed for about 10 minutes, 200 g of a green tea extract ("Polyphenon HG", product of Tokyo Food Techno, a non-polymer catechin concentration = 33.4 mass%, a gallate percentage in the green tea extract= 52.4 mass%, and a caffeine content: 5.8 mass%) was poured in the resulting dispersion. Stirring was continued for about 3 hours at a temperature maintained at room temperature (pH 4.0). Then, a precipitate thus formed and the acid clay were filtered out using a No. 2 filter paper. To the filtrate was added 417 g of ion exchanged water and the resulting mixture was stirred for about 5 minutes under stirring conditions of 100 r/min and 15°C. The resulting mixture was treated by a compact cooling centrifuge (product of Hitachi Koki) at an operation temperature of 15°C to separate a turbidity component thus precipitated (at 6000 rpm for 5 minutes). The solution thus separated was brought into contact with 30 g of activated carbon ("KURARAY COAL GLC", product of KURARAY CHEMICAL), followed by filtration through a 0.2 $\mu$m-membrane filter. To the filtrate was added 200 g of ion exchanged water finally and ethanol was distilled off at 40°C and 2.7 kpa. Then, a water content of the residue was adjusted to obtain "purified green tea extract".
A non-polymer catechin content in the purified green tea extract was 15 mass%.
A non-polymer catechin content in the solid content of the purified green tea extract was 65.1 mass%.
A caffeine/non-polymer catechin mass ratio in the purified green tea extract = 0.023
A gallate percentage in the purified green tea extract = 52.9%
A (protein + dietary fiber)/non-polymer catechin mass ratio in the purified green tea extract = 0.03
Analysis results and evaluation results of the green tea extracts obtained in Examples 1 and 2 are shown in Table 1, while analysis results and evaluation results of the green tea extracts obtained in Comparative Examples 1 and 2 are shown in Table 2. In the overall evaluation, appearance, color tone, and miscellaneous tastes and bitterness/ astringency are evaluated by the score based on the following standard.
5:     Very superior
4:     Superior
3:     A little superior
2:     A little inferior
1:     Inferior
0:     Very inferior

[Table 1]

|  | Example 1 | Example 2 |
|---|---|---|
| Non-polymer catechin concentration after treatment (mass%) | 15 | 15 |
| Non-polymer catechin concentration in the solid content after treatment (mass%) | 54.3 | 63.4 |
| Gallate percentage in non-polymer catechins after treatment (mass%) | 45.1 | 38.5 |
| Caffeine/non-polymer catechins after treatment (mass ratio) | 0.177 | 0.033 |
| (protein+dietary fiber)/non-polymer catechins after treatment (mass ratio) | 0.03 | 0.02 |

(continued)

| | Example 1 | Example 2 |
|---|---|---|
| Evaluation of green tea extract after treatment | The tea extract shows reduction in bitterness/ astringency, and miscellaneous tastes. | The tea extract shows considerable reduction in bitterness/astringency and miscellaneous tastes; has a small caffeine content, is clear, and has a good color tone. |
| Overall evaluation | 3 | 5 |

[Table 2]

| | Comparative Example 1 | Comparative Example 2 |
|---|---|---|
| Non-polymer catechin concentration after treatment (mass%) | 30.8 | 15 |
| Non-polymer catechin concentration in the solid content after treatment (mass%) | 30.8 | 65.1 |
| Gallate percentage in non-polymer catechins after treatment (mass%) | 39.4 | 52.9 |
| Caffeine/non-polymer catechins after treatment (mass ratio) | 0.211 | 0.023 |
| (protein+dietary fiber)/non-polymer catechins after treatment (mass ratio) | 0.28 | 0.03 |
| Evaluation of green tea extract after treatment | The tea extract shows reduction in bitterness/astringency but is not easy to drink because miscellaneous tastes derived from green tea cannot be neglected. | The tea extract shows reduction in miscellaneous tastes and has a small caffeine content, but is not easy to drink because strong bitterness/ astringency remains. |
| Overall evaluation | 0 | 2 |

As is shown in Table 1 and Table 2, the preparation process of the present invention enables to provide a purified green tea extract having a high concentration of non-polymer catechins; having improved taste by reducing bitterness/astringency and also miscellaneous tastes due to dietary fiber derived from green tea; having a reduced protein content; and easy to drink.

Example 3: Packaged beverage

The green tea extracts shown in Table 1 and Table 2 were each mixed with components of a packaged beverage shown in Table 3. A beverage was prepared by adding a balancing amount of ion exchanged water. The beverage was subjected to sterilization treatment based on the Food Sanitation Act of Japan and hot pack filling, whereby a packaged beverage was obtained.

A panel of five male experts was asked to take a single drink of 500 mL of each of the packaged beverages thus prepared and to evaluate miscellaneous tastes and bitterness/astringency of the beverage by scores based on the following standards. The temperature of the beverage at the time of drinking was adjusted to approximately room temperature. The results are shown in Table 3.

Evaluation of miscellaneous tastes

A: The tea extract provides no miscellaneous tastes.

B: The tea extract provides almost no miscellaneous tastes.
C: The tea extract provides miscellaneous tastes a little.
D: The tea extract provides miscellaneous tastes.

Evaluation of bitterness/astringency

A: The tea extract provides no such taste.
B: The tea extract provides almost no such taste.
C: The tea extract provides such taste a little.
D: The tea extract provides such taste.

[Table 3]

| | Invention product | Comparative product |
|---|---|---|
| Green tea extract B of Example 2 | 0.85 | - |
| Green tea extract of Comparative Example 2 | | 0.85 |
| Sweetener | 0.8 | 0.8 |
| Flavor, acidulant | 0.5 | 0.5 |
| Salt | 0.1 | 0.1 |
| Fruit juice | 0.1 | 0.1 |
| Cyclic oligosaccharide | 0.1 | 0.1 |
| Ion exchanged water | Balance | Balance |
| Total amount | 100 | 100 |
| pH of beverage | 3.5 | 3.5 |
| Non-polymer catechins (mass%) | 0.127 | 0.127 |
| Evaluation of foreign taste | A | A |
| Evaluation of bitterness/astringency | A | D |
| Evaluation results | The packaged everage shows reduction in miscellaneous tastes and bitterness/astringency , has refleshing taste, and is easy to drink. | Although the tea extract shows reduction in miscellaneous tastes, it is not easy to drink because strong bitterness/astringency remains. |

As is apparent from the results shown in Table 3, a packaged beverage filled with a purified green tea extract obtained by treating a green tea extract with an enzyme having a tannase activity according to the present invention is easy to drink because it shows reduction in miscellaneous tastes and bitterness/astringency and has refreshing taste.

**Claims**

1. A process for producing a purified green tea extract, which comprises mixing a green tea extract treated with an enzyme having a tannase activity in a mixed solution comprising an organic solvent and water at a mass ratio exceeding 90/10 and not greater than 97/3, and separating a precipitate thus formed.

2. The process according to Claim 1, wherein water is added to the purified green tea extract and/or the organic solvent is removed from the purified green tea extract to adjust the mass ratio of the organic solvent and the water in the solution to fall within a range of from 40/60 to 70/30 and then a turbidity component thus precipitated is separated.

3. The process according to Claim 1 or 2, wherein the green tea extract is brought into contact with an activated carbon and/or an acid clay or activated clay when the green tea extract is mixed in the mixed solution of the organic solvent and the water.

4. The process according to any one of Claims 1 to 3, wherein a gallate percentage in non-polymer catechins decreases by 5 mass% or greater when the green tea extract is treated with the enzyme having the tannase activity.

5. The process according to any one of Claims 1 to 4, wherein the gallate percentage in the non-polymer catechins after the green tea extract is treated with the enzyme having the tannase activity is adjusted to from 0 to 50 mass%.

6. The process according to Claim 3 or 4, wherein the green tea extract is brought into contact with the acid clay or the activated clay at a pH of from 3 to 6.

7. The process according to any one of Claims 1 to 6, wherein the organic solvent is ethanol.

8. A purified green tea extract, which comprises

    (a) non-polymer catechins having a solid content of from 20 to 90 mass%, wherein:
    (b) a gallate percentage in the non-polymer catechins is from 0 to 50 mass%,
    (c) a caffeine/non-polymer catechin mass ratio is from 0 to 0.25, and
    (d) a (protein + dietary fiber)/non-polymer catechin mass ratio is 0.12 or less.

9. A package beverage comprising the purified green tea extract according to Claim 8.

**EP 2 008 524 A1**

## INTERNATIONAL SEARCH REPORT

| International application No. |
|---|
| PCT/JP2007/000413 |

A.  CLASSIFICATION OF SUBJECT MATTER
*A23F3/16(2006.01)i*

According to International Patent Classification (IPC) or to both national classification and IPC

B.  FIELDS SEARCHED

Minimum documentation searched (classification system followed by classification symbols)
A23F3/16

Documentation searched other than minimum documentation to the extent that such documents are included in the fields searched

Electronic data base consulted during the international search (name of data base and, where practicable, search terms used)
JSTPlus(JDream2)

C.  DOCUMENTS CONSIDERED TO BE RELEVANT

| Category* | Citation of document, with indication, where appropriate, of the relevant passages | Relevant to claim No. |
|---|---|---|
| X / Y | JP 2006-063004 A  (Kao Corp.),<br>09 March, 2006 (09.03.06),<br>Full text<br>(Family: none) | 8 / 1-7,9 |
| X / A | JP 2004-180535 A  (Kao Corp.),<br>02 July, 2004 (02.07.04),<br>Full text<br>& EP 1557097 A1          & US 2006/0057261 A1<br>& WO 2004/037022 A1 | 8 / 1-7,9 |
| Y | JP 2004-321105 A  (Kao Corp.),<br>18 November, 2004 (18.11.04),<br>Full text<br>(Family: none) | 1-9 |

| ☒  Further documents are listed in the continuation of Box C. | ☐  See patent family annex. |
|---|---|

| \* | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>    18 June, 2007 (18.06.07) | Date of mailing of the international search report<br>    10 July, 2007 (10.07.07) |
|---|---|
| Name and mailing address of the ISA/<br>    Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2007/000413

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2005-270094 A (Kao Corp.),<br>06 October, 2005 (06.10.05),<br>Full text<br>& EP 1690457 A1        & WO 2005/0531415 A1 | 1-9 |
| Y | WO 2005/053415 A1 (Kao Corp.),<br>16 June, 2005 (16.06.05),<br>Full text<br>& JP 2005-160367 A      & JP 2005-176760 A<br>& JP 2006-122004 A      & JP 2005-270094 A<br>& EP 1690457 A1 | 1-9 |
| Y | JP 2005-176760 A (Kao Corp.),<br>07 July, 2005 (07.07.05),<br>Full text<br>& EP 1690457 A1        & WO 2005/053415 A1 | 1-9 |
| A | Edited by Keiichiro MURAMATSU, Series <Shokuhin no Kagaku> Cha no Kagaku, Kabushiki Kaisha Asakura Shoten, 1991, pages 183 to 191 | 1-9 |
| P,X<br>P,A | JP 2007-061083 A (Kao Corp.),<br>15 March, 2007 (15.03.07),<br>Claims<br>(Family: none) | 1,3,7-9<br>2,4-6 |

Form PCT/ISA/210 (continuation of second sheet) (April 2005)

## INTERNATIONAL SEARCH REPORT

| International application No. |
|---|
| PCT/JP2007/000413 |

---

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

---

**Box No. III    Observations where unity of invention is lacking (Continuation of item 3 of first sheet)**

This International Searching Authority found multiple inventions in this international application, as follows:
   The inventions according to claims 1 to 7 relate to a process for producing a purified green tea extract, while the inventions according to claims 8 and 9 relate to a purified green tea extract and a packed drink comprising the same.
   Thus, the matter common to the inventions according to claims 1 to 7, 8 and 9 resides in a purified green tea extract.
   However, it had been already known before the priority date of the present application to purify a green tea extract (see, for example, JP 2005-270094 A (Kao CORP.)).
   Accordingly, the purified green tea extract, (continued to extra sheet)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**    ☐ The additional search fees were accompanied by the applicant's protest and, where applicable,
the    payment of a protest fee..

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2005)

**INTERNATIONAL SEARCH REPORT**

International application No.

PCT/JP2007/000413

Continuation of Box No.III of continuation of first sheet(2)

i.e., the common matter as described above cannot be recognized as a special technical feature.

Since there is no other matter common to the inventions according to claims 1 to 7 and claims 8 and 9, either to each other or all of the same, seemingly being a special technical feature in the meaning within the second sentence of PCT Rule 13.2, no technical relationship can be found out in the meaning within PCT Rule 13 between these invention groups differing from each other.

Such being the case, it is clear that the inventions according to claims 1 to 9 do not comply with the requirement of unity of invention.

Form PCT/ISA/210 (extra sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60156614 A
- JP 3133928 A
- JP 59219384 A
- JP 51115999 A
- JP 2004321105 A
- JP 2005130809 A
- JP 6142405 A
- JP 2004222719 A
- JP 2005270094 A
- JP 4020589 A
- JP 5260907 A
- JP 5306279 A